# EUROPEAN PATENT APPLICATION

(11) **EP 4 331 958 A1**
(43) Date of publication of application: **06.03.2024**
(21) Application number: 22795071.4
(22) Date of filing: 27.04.2022
(51) Int. Cl.: B62D 51/02, B62D 51/04

(54) **SYSTEM FOR STEERING CARTS BY MEANS OF A PIVOTING HANDLEBAR**

(30) Priority: 28.04.2021 ES 202130371
(71) Applicant: Genius Emobility Systems S.L., 28036 Madrid Madrid (ES)
(72) Inventor: CARRASCO VERGARA, Pablo, 28034 MADRID (ES)
(86) International application number: PCT/ES2022/070261
(87) International publication number: WO 2022/229488

(57) **Abstract**

The present invention applies to carts (1) not ridden by a driver and which have a single direction of travel (FWD) and a single center of rotation when stationary (PCV0). The invention provides a pivoting handlebar (12) on the rear part of the cart (1) that can be freely moved to either side, preventing the driver from having to move laterally during turns. Also provided is an articulated vehicle (0) comprising a combination of a cart (1) provided with a pivoting handlebar (12) and with an element (20) driven behind that transports the driver, both main elements being connected by a hinged structure (21) that is hinged about the cart (1). The pivoting handlebar (12) improves maneuverability and stability, since it prevents the driver from seeking lateral support on the handlebar, thus eliminating the effect of oversteering the vehicle (0) that said support would entail.

## Description

The present invention applies to those carts whose driver does not ride on it but is located behind the cart, and specifically concerns carts whose frame has some of its wheels always rotating around a fixed axis so that they have a single forward direction and a single center of rotation at standstill. This invention proposes a cart steering system having a pivoting handlebar at the rear of the cart and behind said center of rotation at standstill, the pivoting handlebar being freely movable on both sides, which prevents the driver, being distanced from the center of rotation at standstill, from having to move laterally to turn the cart.

The present invention also discloses an articulated vehicle that benefits from said steering system, and comprises a combination of two main elements: a cart provided with a pivoting handlebar, and a rolling driven element, which, coupled to the former from behind, transports the driver; where, like the cart, said driven element has at least one wheel always rotating around a fixed axis; and where both main elements are connected by means of an articulated structure around the center of rotation at standstill of the cart. The driver steers the vehicle from the driven element by controlling the yaw on the cart using the pivoting handlebar. Thanks to the freedom of lateral displacement of the pivoting handlebar, not only does it improve maneuverability but also stability since it prevents the driver from seeking lateral support on the handlebar, forcing him to compensate for his own lateral inertia in the curves on his legs, thus eliminating the vehicle's oversteer effect that such support would entail, thus improving stability and cornering speed.

### BACKGROUND ART

Regarding those cars that do not transport the driver, but rather the driver steers them from behind by controlling their direction by means of manual gripping members, they can be classified by how they arrange their corresponding axles with respect to which their respective wheels rotate:
- Some carts have idle wheels -without fixed axis and therefore nondirectional-, such as those generally used for supermarket shopping, which, as soon as they are moderately loaded, require the user to move laterally to steer the cart by pushing it towards the inside of the curves, thus avoiding significant efforts on the arms, hips and knees, which would be necessary to pivot it around the user.
- Other widely used carts, such as baby strollers, have a fixed axle at the rear while at the front they are supported on idler wheels. So they have a single forward direction, and a single center of rotation at standstill - projection on the ground of the instantaneous axis of rotation when the forward speed is zero- and, although they are easy to drive because the center of rotation is very close to the manual gripping members -the means by which the driver grips the cart- they have two major drawbacks. On the one hand, the idler wheels at the front of the carriage greatly limit the maximum speed, because in addition to being necessarily small, with speed they begin to vibrate and break easily. On the other hand, in order to be able to transport high loads, they must be longitudinally short, because if the center of mass of a cart, its projection on the ground, was positioned too far away from the center of rotation when stationary -because the driver's grip is too close to it to exert a proportionate torque- the lateral inertias would make turning maneuvers very difficult due to the high effort required from the driver -yawing effort-. In this type of cart, the longer the length of the cart, the greater the limitation to drive it, given its tendency to understeer, proportional to the distance between the center of mass and its center of rotation at standstill.
- In the case of generally heavy loads, and also in the case of carts with a substantially longitudinal configuration, to achieve that the moment of inertia of the cart about the vertical axis is balanced with the driver's ability to apply a proportional yaw torque, the center of rotation at standstill should be positioned relatively close to the vertical by the resulting center of mass of the loaded cart; Thus, while this moment of inertia decreases, as the horizontal distance of the manual gripping members from the center of rotation increases, the yaw torque that the driver can exert increases. In case of very high loads, the fixed axle is placed at the front of the cart, which increases the torque capacity of the driver even though the moment of inertia of the cart also increases; but carts with this arrangement are much more uncomfortable or difficult to steer while pushing.

In general, we focus in the present invention on those carts which have some of their wheels always rotating around a fixed axis, so that they have a single forward direction and a single center of rotation at standstill, which is advanced with respect to the manual gripping members. A purpose of the present invention or first problem to be solved is to avoid that, in order to turn the cart, the driver, being distanced from said center of rotation when stationary, has to move laterally to the opposite side.

On the other hand, in recent years, as online commerce has become more and more important, home delivery has grown enormously, and either due to pollution or traffic congestion in urban areas, the use of delivery carts has proliferated, particularly for what is known as the "last mile", where conventional vehicles are finding it increasingly difficult to access.

Much of this delivery is still done with hand carts or trolleys, which can be brought to the front door, but as more and more commerce goes this way, there is increasing interest in facilitating this task with electrically assisted carts or vehicles. On the other hand, this electrification in delivery tasks brings a clear ecological benefit by also replacing many motorized vehicles that still use petroleum derivatives.

Therefore, it is evident the convenience of providing electric assistance to the different traditional carts, as well as to the new ones that may arise from the improved thrust and speed capacity due to their motorization.

Particularly in the field of wheelchairs, there are numerous driver-assisted trolley pushing systems. Some by incorporating an auxiliary element equipped with an electric motor, where the driver, gripping the chair, steers it while walking behind it, but in this case, in addition to limiting the speed of the displacements, it causes some discomfort due to the possibility of tripping, since said element occupies part of the space intended for the driver's feet.

Recently, given the generalization and high availability of single-axis electric scooters, such as the hoverboard described in US8738278B2, a solution has been presented under the MOOEVO brand: WO2020008018A4, of the same inventor as the present application, with a priority date of 2018, which uses a single-axle platform scooter -or hoverboard-type electric scooter- to propel a cart while the driver is being transported. This scooter is arranged behind the cart as the driven element, and connected to it by means of a structure articulated around the center of rotation of the cart when stationary, by means of a structure of arms in a trapezoid configuration which virtually defines a center of articulation of the cart-scooter assembly.

This solution is highly efficient in the case of pushing wheelchairs, covering distances and routes unthinkable when it comes to walking while pushing. The differentiated thrust between both motors of a hoverboard in this application, the result of the invention itself, optimizes the driving experience of the cart in turns, reinforcing the directional effect of the articulated geometry formed by the cart and said platform. However, when using carts with a fixed axis at the rear and idler wheels at the front, designed to be pushed by walking, they are not prepared to travel such a long distance and at such a high speed. Their idler wheels vibrate a lot with speed, generating discomfort and resistance to progress, and frequently, when they momentarily lose contact with the ground, they cross over and when they return to contact with the ground they receive an abrupt blow that, when repeated, ends up tearing these idler wheels off the cart. To avoid this, wheelchair drivers tend to raise their wheelchairs by preventing the idler wheels from coming into contact with the ground, which gives the wheelchair less rolling resistance, making it more comfortable and faster, as well as more reliable, but it is a balance that the driver has to maintain by hand.

Another patent application, also by the same inventor as the present one, with application number PCTES2021070755, solves this problem by making use of a single-axle cart, but restricting the pitching of the cart by means of the articulated structure that joins it with a hoverboard or with any type of motorized rolling platform as the driven element. However, this configuration, using manual gripping members solidly attached to the cart, presents two new problems to be solved:
- First in terms of maneuverability, since the driver cannot move sideways to make tight turns when riding on the rolling platform.
- Second, it affects cornering behavior at moderately fast speeds, since, for correct dynamic cornering behavior, the driver, standing on the rolling platform. with his feet substantially apart and spaced perpendicular to the direction of travel, should lean his body towards the inside of the curve as on a bicycle, albeit supported by his own legs, as a skier would do. However, if the driver, in order to counteract his own centrifugal inertia, leans on the manual gripping members, which is a common reaction when driving a vehicle, he would apply forces that, because the gripping members have moved to the outside of the curve, cause oversteer, so that they not only limit the cornering speed, but could also be the cause of a rollover accident.

These two problems are the ones that the present invention solves in the case of articulated vehicles formed by a cart that couples a rolling platform or driven element for the driver steering behind the cart.

It should be noted that in the state of the art there are idler dollies, which are hooked behind a trolley, e.g. in baby carriages. In that case, the platform does not greatly condition the driving of the cart, and they are generally for carrying an older sibling, and not for the driver, which has nothing to do with the technical field applicable to the present invention.

In case an idler platform is used to transport the driver of an already motorized cart, the speed is very limited, because if curves are taken with a certain speed, all the lateral inertia due to the driver himself behind the trolley, not being able to be supported by the idler wheels, would cause a large oversteer effect that would greatly affect the ability to drive the cart.

Regarding the application of a pivoting handlebar for a driver behind a cart, in the state of the art it is worth mentioning the patent US2004011573A1 of Dean Kamen, who is also the inventor of the Segway PT -US6827163B2-consisting of a self-balancing transport vehicle, with a single wheel axle whose axis is fixed, and a platform on which the rider stands upright, with a handlebar at the front of which the rider holds on to and which, when moved transversely to both sides as a joystick, is pushed asymmetrically by two motors corresponding to its two wheels to make the vehicle turn.

In US2004011573A1 use is made of a Segway PT but in reverse, that is, with the rider on foot, gripping the handlebar from the side opposite the platform -which was normally the front of the vehicle- using said vehicle platform as a support for a load. It is therefore a cart for transporting loads that a driver can either push or pull, and can therefore be understood as a cart whose driver does not ride on it, but is located behind it, holding on to a handlebar, whose frame has its wheels always rotating around a fixed axis so that they have a single forward direction, and a single center of rotation when stationary, and which, in addition, may have the pivoting handlebar that can be leaned on both sides. However, what makes it intrinsically different from the invention subject of the present patent application is that:
- The lateral displacement of the handlebar is not free but dependent since it is functionally linked to the turning -yaw turn- of the cart, being, in fact, the only reason for this mechanical degree of freedom since it is precisely this joystick-like operation that is the turning mechanism of the Segway PT. In addition, this turning of the vehicle when used as a transport trolley would cause a greater lateral displacement of the handlebar, causing a positive oversteer reinforcement, making cornering control much more complicated.
- This is a cart where the handlebar is positioned substantially above and in any case longitudinally close to the wheels axis -in terms of its projections on the ground plane- so it must be understood that it does not apply to the type of carts object of the present invention which gives solution to a problem that only appears and is proportional to the distance between the two. Therefore, this vehicle does not have the above-mentioned "first problem to be solved". And in the event that an expert should consider that this distance corresponding to the aforementioned document could be any, it should be taken into account that said oversteering problem would be proportionally aggravated.
- In the specific document corresponding to a transport trolley for cargo - US2004011573A1- not only is this degree of freedom of the Segway PT handlebar not mentioned, but the drawings show an adapted Segway vehicle with a rigid handlebar.

Finally, reference should be made to patent application EP3705101A1, with a priority date of 2019, which discloses a wheelchair or cart, functionally very similar to the described case of a Segway used in cargo cart mode, with the rider gripping a handlebar behind the cart to drive it, and which in one of its alternative embodiments said handlebar tilts to both sides for turning the cart.

In this case, we are dealing with a pivoting handlebar specifically defined as a joystick and therefore with no tilting degree of freedom, since its lateral displacement -measured by corresponding sensors- electronically forces the cart to turn, this being in fact the only reason for its mechanical displacement range. In this case, in order to avoid precisely this positive oversteering reinforcement of the previous case, the lateral displacement of the handlebar occurs precisely towards the outer side of the curve, contrary to what is proposed in the present patent application.

The same document -EP3705101A1- also discloses an articulated vehicle as a combination of its self-balancing cart and a dolly which, connected thereto by the cart axle, carries the driver behind the cart.

Consequently, although both documents cited respectively propose versions of a handlebar that tilts, since in both cases the turning of the cart is a function of the degree of tilting of the handlebar, we can be sure that in both cases it is an electronic handlebar with joystick functions, which is not mechanically free since it always has a stable central position when no control forces are exerted on it. Moreover, their corresponding intentions were not intended to solve, and do not solve, any of the three "problems to be solved" in this application.

### DISCLOSURE OF INVENTION

The present invention applies to any rolling chassis, which we call a cart, satisfying the following three conditions:
- It does not carry the driver but is driven from behind by the driver, who controls its yaw by means of manual gripping members.
- At least one of its wheels always rotates around a fixed axis, so it has a single forward direction and a single center of rotation at standstill (projection of its instantaneous axis of rotation onto the ground at zero forward speed). In the case of a single fixed axis, it is located at the projection on the ground of the midpoint of this axis.
- This cart's center of rotation at standstill is located advanced in the forward direction of the cart with respect to the manual gripping members.

Since when maneuvering to turn a cart, if the manual gripping members were fixed to the cart, being set back with respect to the center of rotation at standstill, they would force the driver to move laterally toward the side opposite to that of the turning, and the more so the more distant said manual gripping members are from said cart's center of rotation at standstill -according to its forward direction-, the present invention discloses a pivoting handlebar as a steering system for this type of carts.

Said pivoting handlebar comprises manual gripping members and mechanical tilting linkage means for its attachment to the structure or frame of a cart so that, on the one hand, they allow the manual gripping members to displace freely on both sides and substantially perpendicularly to the forward direction of the cart, and, on the other hand, biunivocally restrict its yaw so that a driver controls the forward direction of the cart by grasping said members from behind, the yaw of the cart being thus independent of the lateral displacement of the pivoting handlebar and in fact dependent only on the yaw adopted by the manual gripping members. Therefore, the present invention proposes a cart incorporating a system for steering carts by means of a pivoting handlebar.

Preferably, said manual gripping members also have restricted any other degree of freedom with respect to the cart, such as its pitching ability, which allows the driver to push or pull the cart, or lean forward and backward, by means of the manual gripping members.

In a preferred embodiment, the mechanical tilting linkage means comprise a steering column being attached to the structure of a cart by means of a pivot axis substantially parallel to the forward direction of the cart. Said steering column incorporates the manual gripping members at its upper end, and said pivot is located sufficiently far below so that, being swinging by rotation about said pivot axis their only degree of freedom relative to the cart, these can move freely but substantially laterally, preferably from side to side of the cart. Thus, its yaw and pitch are the same as those of the cart.

The cart may be equipped with one or more motors, preferably electric.

The present invention also discloses an articulated vehicle based on said steering system, being a combination of two main elements: said cart provided with a pivoting handlebar, and a driven element, which, coupled to the former from behind, transports the driver; where, like the cart, said driven element has at least one wheel always rotating around a fixed axis and therefore also has its own single forward direction; and where both main elements are connected by means of an articulated structure around the cart, so that said driven element can rotate with respect to the vertical, through an articulation center of the vehicle.

For this purpose, depending on the form adopted by the articulated structure between the two main elements -cart and driven element- there may be either an actual center of articulation of the vehicle, fixed to the cart - materialized for instance by means of a spherical plain bearing or by a pivot joint- or a virtual center of articulation, that is, when the instantaneous center of rotation of the driven element relative to the cart is only geometrical and not material, and even if this center moves according to the relative yaw between the two main elements -as occurs for example in a trapezoidal arm structure-whose position will vary around an averaged center. Preferably, this articulation center of the vehicle -whether real or virtual- is set slightly ahead of the center of rotation of the cart at standstill in order to achieve greater stability in the driving dynamics of the vehicle.

None of the aforementioned centers should be confused with the instantaneous center of rotation of the vehicle on the ground, which is located -assuming there is no slippage- at the intersection between the projections on the ground of two planes which, being perpendicular to the direction of advance of each main element, pass through their respective centers of rotation at standstill.

The driver, from the driven element, controls the direction of the vehicle by means of the pivoting handlebar on the cart. Thanks to the freedom of lateral displacement of the manual gripping members, two important improvements are achieved:
- It improves maneuverability since the driver -being mounted on the driven element- can no longer move sideways but rather sways and should do so towards the inside of the curve; if manual gripping members fixed to the cart were used, they would move towards the outside of the curve and the driver would move away from the controls, not only from the yaw controls of a handlebar -which would limit the execution of both tight and fast turns- but also from any brakes or throttle that the manual gripping members might incorporate.
- It improves stability and cornering speed, as it prevents the driver from seeking lateral support in the manual gripping members during turns, forcing him to compensate his own lateral inertia as if it were a bicycle or motorcycle, avoiding not only a poor weight distribution that implies a greater risk of rollover, but also the corresponding yaw moment, which, by causing oversteer, would amplify this risk. In the preferred case where the driver is standing upright on a platform-shaped driven element, he would have to balance on his legs, seeking to balance himself as an alpine skier would do.

In a preferred embodiment, the driver will stand on a platform-shaped driven element, with both feet sufficiently far apart in the direction perpendicular to the forward direction of the driven element to provide sufficient lateral stability.

In order to provide mobility to this articulated vehicle, one or more motors, preferably electric, will be used.

In a preferred option, it will be the driven element that is provided with motorization. And even more preferably, said driven element will have two motors and two wheels, each of them connected to one of said motors, and the electronic management of said motors will respond differentially when the vehicle is turning or cornering, applying less torque or power to the wheel going on the inside and more torque or power to the one corresponding in that case to the outside of the turn.

In another preferred option, if the cart with pivoting handlebar already has motorization, the driven element can be passively trailed behind the cart, since having a single forward direction, it will fulfill the function of supporting the lateral inertia of the driver in curves.

Logically, it is also feasible to provide motorization to both main elements of the articulated vehicle, the cart and the driven element, which can be useful when it is of interest to improve traction or increase thrust capacity.

### BRIEF DESCRIPTION OF DRAWINGS

- FIG-1 shows a perspective view of a cargo cart (1), provided with a pivoting handlebar (12) according to a preferred embodiment of the present invention, wherein can be appreciated: a frame (10) supporting two wheels (131, 132) on the same fixed axis (13); the mechanical tilting linkage means (1200); and, schematically, the center of rotation at standstill (RCV0) and the forward direction (FWD), as well as the degree of freedom of the pivoting handlebar (12) allowing the manual gripping members (122) to move on both sides, left (L) and right (R).
- FIG-2 shows a perspective view of a cart (1) for cleaning services provided with a pivoting handlebar (12) according to another preferred embodiment of the present invention, which is motorized on its two wheels (131, 132) on the same fixed axis (13), both being provided with hub motors (1310, 1320).
- FIG-3 shows a perspective view of a preferred embodiment for an articulated vehicle (0) according to the present invention, as a combination of the cart (1) provided with a pivoting handlebar (12) corresponding to FIG-1, and of a motorized driven element (20), in the form of a rolling platform, which is attached to the cart (1) by means of an articulated structure (21).
- FIG-4 corresponds to a rear view of the articulated vehicle (0) of FIG-3, showing an attitude that the various elements of the vehicle would adopt during a right-hand turn.
- Fig-5 shows a perspective view of another preferred embodiment of an articulated vehicle (0) according to the present invention, as a combination of a motorized cart (1) for cleaning services, provided with a pivoting handlebar (12), and a driven element (20), in the form of a rolling platform, connected to the cart (1) by means of an articulated structure (21).
- Fig-6 shows a perspective view of another preferred embodiment of an articulated vehicle (0) according to the present invention, resulting in a tricycle as a combination of a motorized cargo cart (1) provided with a pivoting handlebar (12), and a driven element (20) in the form of the rear part of a bicycle.
- Fig-7 shows another perspective view of the same tricycle.

### DETAILED DESCRIPTION OF A PREFERRED EMBODIMENT

The present invention discloses, in a first preferred embodiment, a cart (1), in this case, a cargo cart, provided with a pivoting handlebar (12). Said cart (1) has a frame (10) supporting two wheels (131, 132) which rotate around the same fixed axis (13), one wheel being on each side of the cart (1). Said fixed axis (13) is positioned longitudinally centered on the frame (10) so that the center of gravity of the cart (1), even when loaded, does not move excessively away from the center of rotation at standstill (RCV0) of the cart (1). Said pivoting handlebar (12) comprises manual gripping members (122), which are structurally incorporated and fixed to the upper end of a steering column (120) which at its lower end is connected to the frame (10) of the cart (1) by means of a pivot joint (121) about an axis substantially parallel to the forward direction (FWD) of the cart (1). Said pivot joint (121), which is positioned in the plane of transverse symmetry of the cart (1), restricts the pivoting handlebar (12) from any other degree of freedom with respect to the cart (1), being exclusively the rotation around said pivot (121) which allows the manual gripping members (122) to move freely on both sides, left (L) and right (R).

In another preferred embodiment of the present invention, it is disclosed a cart (1), in this case for cleaning services, also provided with pivoting handlebar (12), and which is motorized on its two wheels (131, 132) rotating around the same fixed axis (13), which are provided with hub motors (1310, 1320). In addition, it has an idler wheel (15) at the rear, to keep it balanced regardless of the weight distribution as it is loaded. Both motors (1310, 1320) can respond to a single throttle that will preferably operate in both directions, forward and reverse, accelerating or braking.

The present invention also discloses a preferred embodiment of an articulated vehicle (0) as a combination of the already described cart (1) provided with a pivoting handlebar (12), and of a driven element (20) coupled to the former from behind for transporting the driver; where, as in the case of the cart (1), said driven element (20) has at least one wheel always rotating around a fixed axis (23) and therefore also has its own single forward direction; and wherein both main elements are connected by means of an articulated structure (21), which is hinged around the cart (1), so that said driven element (20) can substantially swivel relative to the vertical, by an articulation center of the vehicle (210) located ahead of the center of rotation at standstill (RCV0) of the cart (1).

In a first embodiment, said articulated vehicle (0) is provided with a motorized driven element (20). This may be in the form of a rolling platform with two wheels rotating around the same fixed axis (23). In this case, it is proposed that said driven element (20) be of the hoverboard type, with a motor coupled to each of its two wheels, which allows it a differential thrust in curves. Its electronic control allows it to push and brake forward and backward, and, while it may be based on its own pitch inclination as is typical of hoverboards, in another preferred embodiment it may be carried out through other sensors, such as a fist throttle -as in motorcycles- or trigger -as in quads-.

In a second embodiment of said articulated vehicle (0) both wheels (131, 132) of the cart (1) are driven by corresponding motors (1310, 1320).

### OTHER EMBODIMENTS

Regarding the above-described embodiments of the present invention, other modifications may be employed without deviating from the scope of the present invention as defined by the appended claims. For example, some or all of these joints could be materialized by flexible joints. Also, the size, shape, placement, or orientation of the various components can be varied. Components shown directly connected or in contact with each other may have intermediate structures arranged between them. The functions of one element can be performed by two, and vice versa. Therefore, the scope of the invention should not be limited by the specific embodiments described, but by the appended claims.

In an alternative embodiment of articulated vehicle (0) according to the present invention, said cart (1) provided with a pivoting handlebar (12) may present a frame (10) with such a simplified structure that it only consists of the axle which embodies the fixed axis (13).

The main purpose of said driven element (20) is to be able to transport the driver of the articulated vehicle (0), and, when appropriate, to provide traction to the cart, and, although we have deepened by describing it as a rolling platform on which the driver is standing, presenting a substantially flat shape, it is rather a rolling chassis that can adopt any other convenient shape, allowing to house one or several wheels with or without motors. Such is the case with the rear part of a bicycle chassis, so that, together with the cart at the front, the resulting articulated vehicle is a cargo tricycle.

In another alternative embodiment, the driver may be located on the articulated structure (21) that connects the driven element (20) to the cart (1).

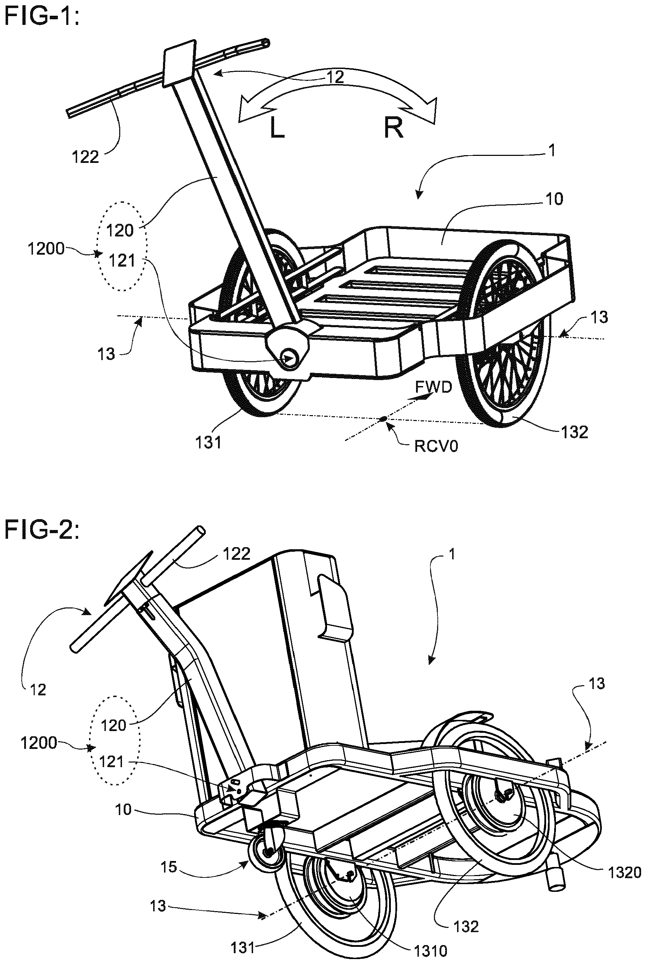

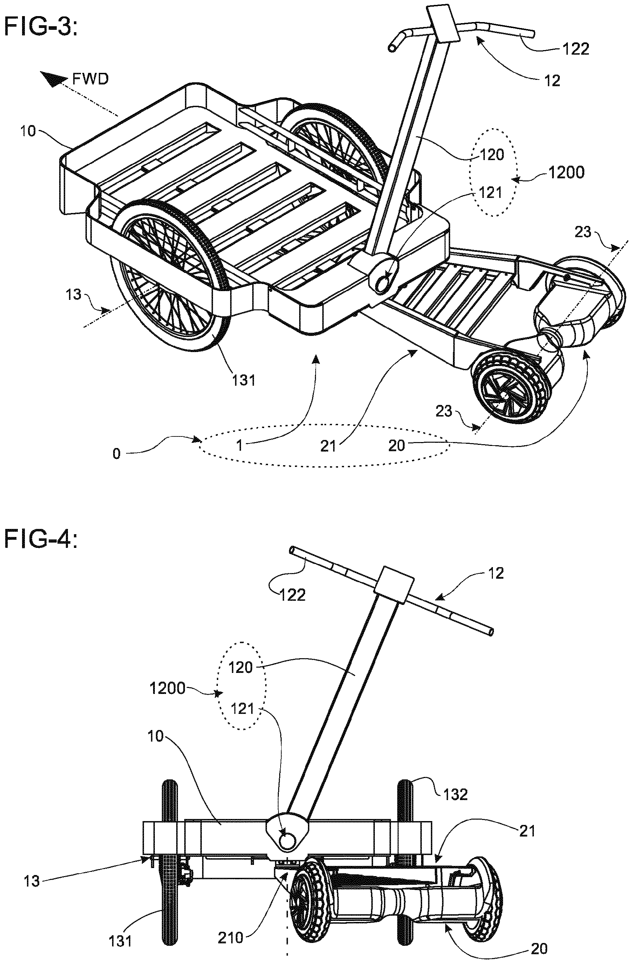

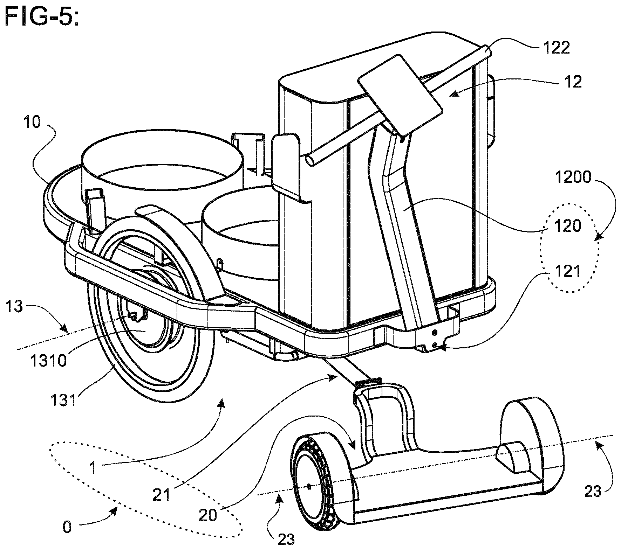

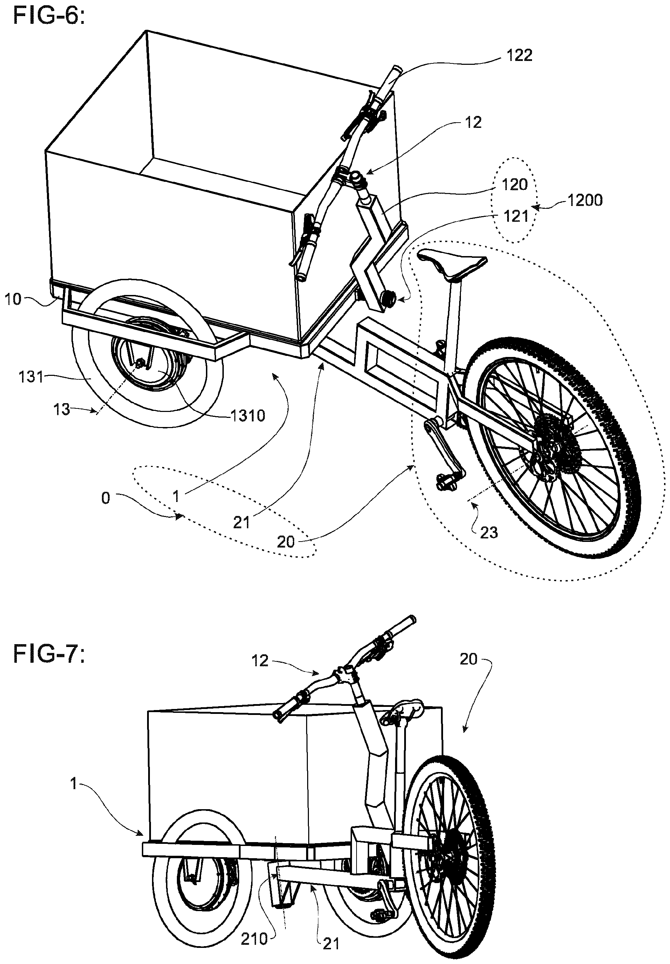

## Claims

1. System for steering carts by means of a pivoting handlebar (12), applicable to a rolling chassis in general, which we call cart (1), which does not carry the driver, since the driver steers it from behind, controlling its yaw angle by means of manual gripping members (122); and where at least one of its wheels (131, 132) always rotates around a fixed axis (13), so that it has a single forward direction (FWD) and a single center of rotation at standstill (RCV0), which is located advanced in the forward direction (FWD) of the cart (1) with respect to the manual gripping members (122).
wherein said pivoting handlebar (12) comprises said manual gripping members (122) and also comprises mechanical tilting linkage means (1200) for incorporation into the frame (10) of the cart (1), **characterized in that** said mechanical tilting linkage means (1200) allow free lateral displacement of said manual gripping members (122) with respect to the cart (1), on both sides (L, R) and substantially perpendicular to the forward direction (FWD) of the cart (1), so that said pivoting handlebar (12) biunivocally restricts the yaw of the cart (1), the yaw of the cart (1) being thus independent of the lateral displacement of the pivoting handlebar (12).

2. System for steering carts by means of a pivoting handlebar according to claim 1, wherein said mechanical tilting linkage means (1200) comprise a steering column (120) and a pivot joint (121), and wherein said steering column (120), at its upper end, provides fixed support to the manual gripping members (122), and at its lower end is connected to the frame (10) of the cart (1) by means of said pivot joint (121) whose axis is substantially parallel to the forward direction (FWD) of the cart (1).

3. Rolling chassis or cart (1) comprising a system for steering carts by means of a pivoting handlebar (12) according to claim 1, which we call cart (1) provided with a pivoting handlebar (12).

4. Cart (1) provided with a pivoting handlebar (12) according to claim 3, **characterized in that** it comprises at least one wheel (131) driven by a motor (1310), which we call a motorized wheel (131).

5. Articulated vehicle (0) with a system for steering carts by means of a pivoting handlebar (12), comprising two main elements: a cart (1) provided with a pivoting handlebar (12) according to claim 3, and a driven element (20) coupled from behind to said cart (1) for transporting the driver; wherein said driven element (20) has at least one wheel that always rotates around a fixed axis (23); and wherein both main elements are connected by means of an articulated structure (21), which is hinged around the cart (1) so that said driven element (20) can swivel relative to the vertical by an articulation center of the vehicle (210).

6. Articulated vehicle (0) with a system for steering carts by means of a pivoting handlebar (12) according to claim 5, **characterized in that** said center of articulation of the vehicle (210) is positioned slightly ahead of the center of rotation at standstill (RCV0) of the cart (1).

7. Articulated vehicle (0) with a system for steering carts by means of a pivoting handlebar (12) according to claim 5, **characterized in that** said driven element (20) comprises at least one motorized wheel.

8. Articulated vehicle (0) with a system for steering carts by means of a pivoting handlebar (12) according to claim 7, **characterized in that** said driven element (20) has the shape of a rolling platform and comprises two motorized wheels, where each of them is driven by a corresponding electric motor, and where an electronic control manages both motors independently, applying torque or power to both motorized wheels in a differential manner to improve both the maneuverability and the cornering stability of the articulated vehicle.
